# EUROPEAN PATENT SPECIFICATION

(11) **EP 2 360 029 B1**
(45) Date of publication and mention of the grant of the patent: **26.03.2014**
(21) Application number: 11250129.1
(22) Date of filing: 04.02.2011
(51) Int. Cl.: B60B 1/04, B60B 1/12

(54) **Spoke wheel**
Speichenrad
Roue à rayons

(30) Priority: 12.02.2010 JP 2010029420
(43) Date of publication of application: 24.08.2011
(73) Proprietor: Daido Kogyo Co., Ltd., Ishikawa Pref. (JP)
(72) Inventor: Miyamoto, Tomo, Ishikawa Pref. (JP)
(74) Representative: Lamb, Martin John Carstairs

(56) References cited:
- WO-A1-2005/037573
- JP-A- 60 161 201
- JP-A- 2000 301 902

## Description

### BACKGROUND OF THE INVENTION

### Field of the Invention

The present invention relates to a spoke wheel for use in motorcycles and the like and more specifically to a spoke wheel for use preferably for a tubeless tire. The spoke wheel of the invention is assembled by engaging retaining heads of wired spokes with a rim and by fastening the spokes by nipples in a hub.

### Related Art

A wheel for use in motorcycles is composed of a hub mounted to a wheel axis, a rim mounted with a tire and spokes that connect the hub with the rim in general. While there are two kinds of wheels of a cast wheel in which the rim, spokes and hub are unitarily molded by means of casting and a spoke wheel (or more precisely a wired spoke wheel) in which the rim is connected with the hub by a large number of wired spokes, the invention relates to the spoke wheel. The spoke wheel can absorb shocks by the rim and spokes that are deformable and off-road motorcycles mostly adopt the spoke wheel.

Each spoke has a retaining head at one end, a male screw portion at another end and a straight wired body portion between the head and the male screw portion and the spoke is fixed between the rim and the hub by retainably anchoring the head on the hub side and by fastening the male screw portion on the rim side by means of a nipple in general. There is also known a spoke wheel in which the spoke is connected between the rim and the hub by retainably anchoring the head to the rim and by fastening the male screw portion on the hub side by means of a nipple (see Patent Document 1 for example).

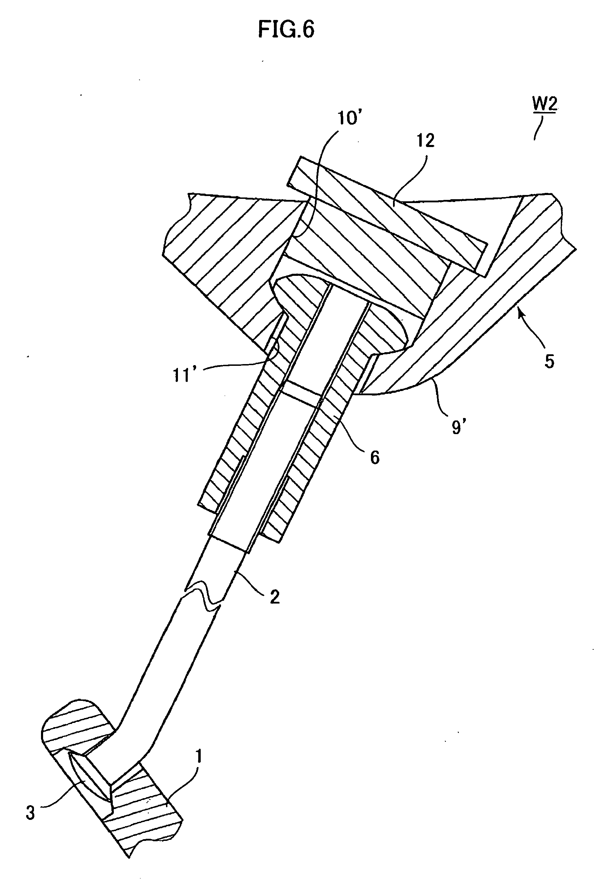

Meanwhile, there is also devised a spoke wheel W2 for a tubeless tire in which a head portion 3 of a spoke 2' is retainably anchored to a hub 1 and the spoke 2' is fastened to a rim 5 through an intermediary of a nipple 6 as shown in FIG. 6. In the spoke wheel W2, the rim 5 has a projecting portion 9' formed circularly around the whole circumference of the rim 5 at a widthwise center part (drop portion or well portion) of the rim 5 so as to project in the radially inward direction of the wheel (referred to simply as the radially inward direction or a radially inside hereinafter) and to have a predetermined thickness. Then, concave portions 10' and spoke receiving holes 11' are formed through the projecting portion 9' so that they have a predetermined thickness from the radially outside of the wheel (tire mounting side, referred to simply as the radially outside or radially outward direction hereinafter). The spoke wheel is assembled hermetically by fitting a rubber cap 12 into each concave portion 10' after fixing the spoke 2' by fittingly inserting the nipple 6 through the spoke receiving hole 11' (see Patent Document 2 for example).

### [PRIOR ART DOCUMENT]

### [PATENT DOCUMENT]

[Patent Document 1] Closest prior art Japanese Patent Application JP 60161201 A
[Patent Document 2] Japanese Patent Application JP 2000-301902 A

### [Problems to be Solved by the Invention]

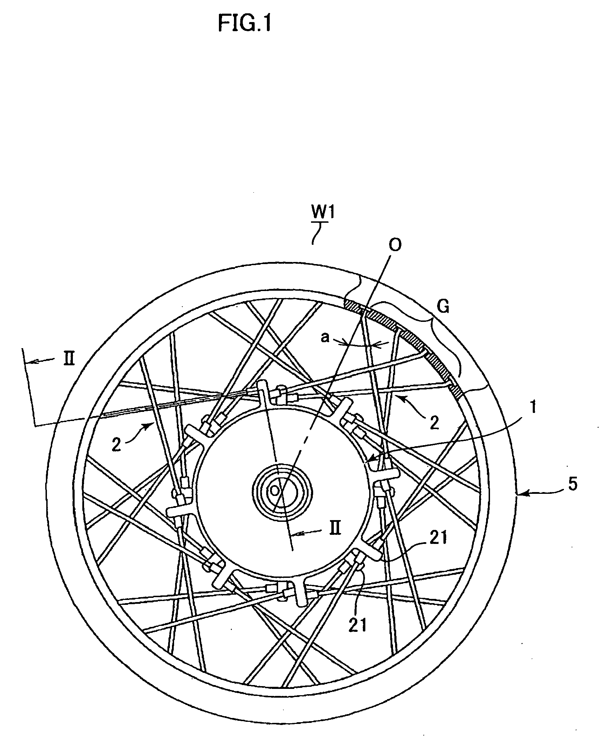

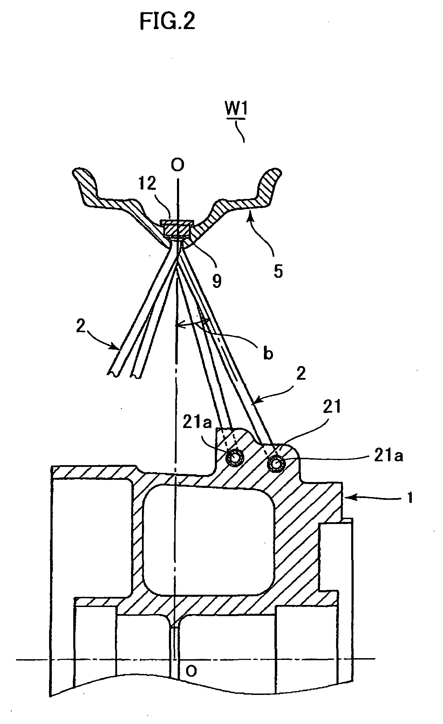

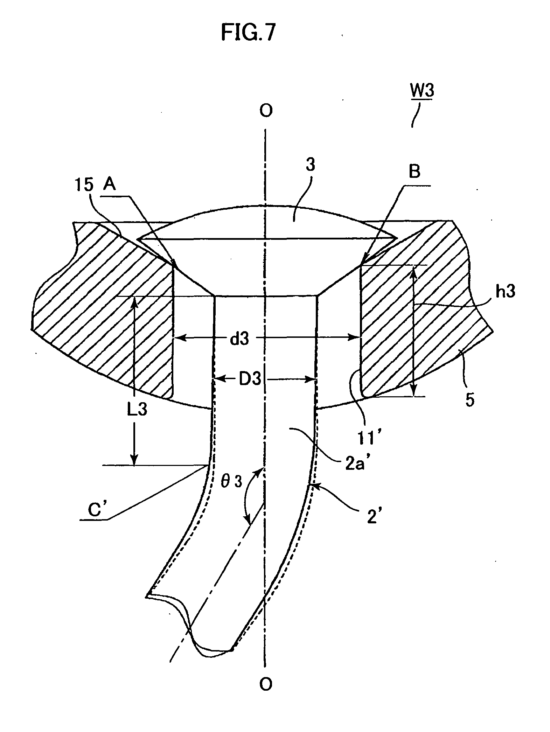

A spoke wheel W3 in which the head of the spoke is retainably anchored - to the rim and the other end of the spoke is fastened to the hub by the nipple is arranged as follows. That is, a spoke receiving hole 11' is formed at the widthwise center part of the rim 5 so that a center line of the hole is aligned with a center line O-O extending from the radially outside to the center of the hub and so that a diameter d3 of the spoke receiving hole 11' is relatively larger than a diameter D3 of the spoke 2'.
The spoke 2' has a head straight portion 2a' extending straightly by a predetermined length L3 from the head portion 3 and is curved from a curve starting portion C' by a predetermined curved angle θ3. The spoke then extends straightly to the hub. Accordingly, the head portion 3 of the spoke 2' butts against a stepped portion 15 of the spoke receiving hole 11' at two points A and B in the figure and the length L3 of the head straight portion 2a' to the curve starting portion C' is larger than a thickness h3 of the spoke receiving hole 11' of the rim 5 (L3 > h3).
Still more, the head straight portion 2a' extends along the center line O-O so that it is inserted through the spoke receiving hole 11' without contacting with the surface of the hole. While the spoke 2' is pulled by the nipple on the hub side and is elastically deformed from a solid-line position to a broken-line position in FIG. 7, the head portion 3 contacts at the two points A and B (denoted here as the two points even through there is a contact area having a predetermined length in a peripheral direction) of the stepped portion 15 and the spoke 2' will not contact with the surface of the spoke receiving hole 11' even if the tension is applied in general. It is noted that although there is a case when part of the spoke 2' contacts with the surface of the spoke receiving hole 11' due to variations and others of the spoke during its manufacturing or mounting process, an angle of contact thereof is small even if the spoke contacts with the surface of the hole because the head straight portion 2a' is longer than the thickness h3 of the rim. Still more, because the spoke 2' is designed so that the head straight portion 2a' extends along the center line O-O and directions in which the spoke extend corresponding to a plane angle (see a in FIG. 1) and an elevation angle (see b in FIG. 2) are all defined by the predetermined curved angle θ3 described above, the curved angle is relatively large.

When a large load is applied between the tire and the hub, i.e., a large impact load acts on the rim 5, of the prior art spoke wheel W3 when a motorcycle jumps and lands for example, the rim deforms so as to be flattened and a large compressive load acts on the spokes 2 at a landing part. If the compressive load exceeds the tensile force applied to the spoke, the spokes 2' tend to be loosened.
Still more, because the spoke 2' exerts no force for anchoring the spoke to the rim 5 against a force in a direction of thrusting up the spoke 2', the rim 5 is prone to be plastically-deformed and to lose a normal function as an accurately circular spoke wheel quickly. When the rim is provided with a hermetic cap member such a rubber cap as shown in FIG. 6, the hermetic function of the hermetic cap member might be lost by the thrusting movement of the spoke described above.

Meanwhile, in the case of the spoke wheel W2 in which the spoke 2' is fixed to the rim 5 through the nipple 6 as shown in FIG. 6, the spoke receiving hole 11' through which the nipple 6 is inserted and retained must be formed in the rim 5. A diameter of the nipple 6 must be larger than a diameter of the spoke as far as it is screwed with a male screw portion of the spoke 2' and a length of a head of the nipple must be longer than a length of the head of the spoke. That is, the both diameter and depth of the spoke receiving hole 11' formed in the rim 5 cannot but be large. A diameter of the concave portion 10' is also enlarged to fit the rubber cap 12 on the radially outside of the receiving hole. That is, the width and thickness of the projecting portion 9' having the predetermined thickness to form these receiving hole 11' and concave portion 10' increase, causing an increase of weight of the spoke wheel.

Still more, because the straight spoke 2' extending from the hub is fastened by the nipple 6 at the rim 5, the spoke receiving hole 11' and the concave portion 10' concentrically formed with the receiving hole must be formed aslant with respect to the wheel center line by considering the elevation and plane angles in tensioning the spoke and works for forming the spoke receiving hole 11' and others are relatively cumbersome. Still more, because the spoke receiving hole 11' and the concave portion 10' must be formed aslant in the projecting portion 9, the width and thickness of the projecting portion must be increased, also causing the increase of weight of the spoke wheel.

### SUMMARY OF THE INVENTION

Accordingly, the invention aims at solving the abovementioned problems by providing a spoke wheel capable of anchoring a retaining head of a spoke by a spoke receiving hole of a rim with a relatively simple structure.

### [Means for Solving the Problems]

According to a first embodiment of the invention, there is provided a spoke wheel (W1) having the features of claim 1.

According to a second embodiment of the invention, the spoke wheel is arranged as a tubeless tire by forming a concave portion (10) on the radially outside of the spoke receiving hole (11) through the stepped portion (15) so that a center line thereof coincides with that of the spoke receiving hole (11) and a seal member (12) is hermetically fitted into the concave portion (10).

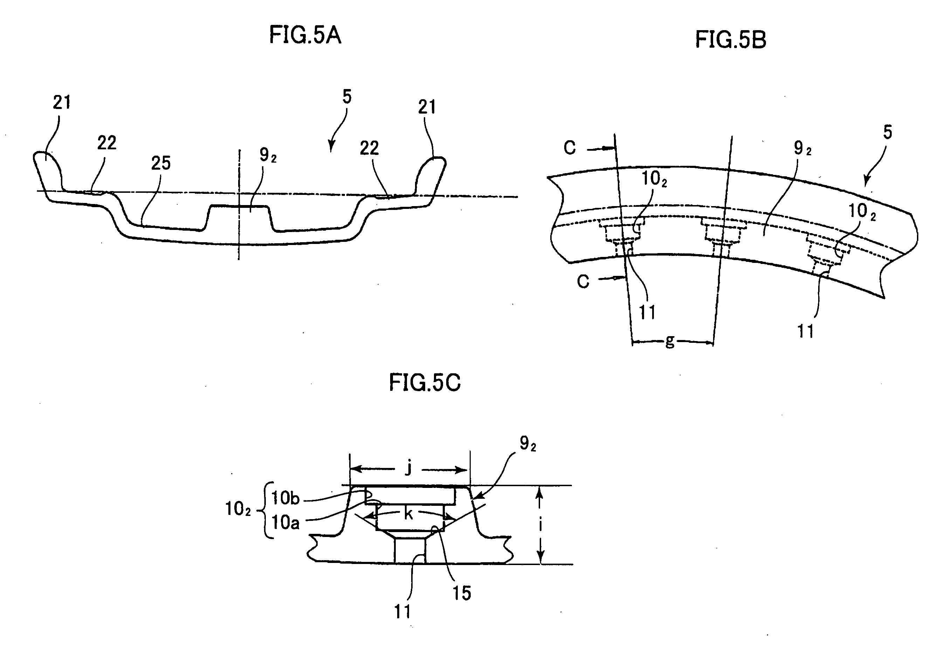

According to a third embodiment of the invention, a projecting portion (9) having a predetermined thickness (i) and a predetermined width (j) is formed circularly around the whole circumference of the rim (5) so as to project in the radially outward direction at a widthwise center part of the rim (5) and the spoke receiving holes (11) and concave portions (10) are formed through the projecting portion (9) as shown in FIG. 5 for example.

It is noted that the numerals within the parentheses described above are denoted for the purpose of only collating with parts shown in the figures and do not affect the scope of Claims of the invention by any means.

### [Advantageous Effects of the Invention]

According to the first embodiment of the invention, the spoke receiving hole is formed so that it is aligned with the wheel center line and the spoke head straight portion is arranged to be short and is inserted through the spoke receiving hole while inclining by the predetermined angle (α) so that the spoke head straight portion butts against the edge portion (small opening portion) on the radially inside of the spoke receiving hole near the curve starting portion (C) as the head portion seats on the stepped portion in contact with the two points (A and B), so that the spoke is anchored also in a direction of thrusting up the spoke and is hardly loosened even if impact loads act repetitively on the spoke wheel. Still more, because the spoke is hardly plastically-deformed by coupling with the fact that it is anchored also by the rim, i.e., in the direction of thrusting up the spoke, the spoke wheel can keep its adequate state for a long period of time by the simple arrangement of just slightly changing the shape of the spoke.

According to the second embodiment of the invention, the spoke wheel adapted for the tubeless tire may be simply arranged by providing the concave portion on the radially outside of the spoke receiving hole and by fitting the seal member such as a rubber cap into the concave portion. Then, because the spoke is anchored by the rim, i.e., also in the direction of thrusting up the spoke, and the seam member is not removed out of the concave portion by the spoke, it becomes possible to realize the tubeless tire for motorcycles and off-road motorcycles in particular that receive the impact load repetitively and require excellent shock absorbing performance.

According to the third embodiment of the invention, the projecting portion of the rim formed at the widthwise center part thereof for forming the concave portions for the seal members and the spoke receiving holes may be relatively thin because the spoke receiving hole anchors the spoke head straight portion. The concave portion may be also small in diameter corresponding to that. The width and the thickness of the projecting portion may be reduced also coupling with the fact that the concave portion and the spoke receiving hole are formed by being aligned with the wheel center line, so that the spoke wheel adapted for the tubeless tire may be lightened. Still more, because the projecting portion projects in the radially outward direction of the rim, the projecting portion is positioned within the tire and is invisible from the outside when the tire is mounted to the rim. Accordingly, it becomes possible to provide the spoke wheel for the tubeless tire having a simple-look design.

### BRIEF DESCRIPTION OF DRAWINGS

FIG. 1 is a front view of a spoke wheel to which the present invention is applied;
FIG. 2 is a section view of the spoke wheel taken along a line II-II in FIG. 1;
FIG. 3 is a section view, along the spoke, showing spoke mounting parts of the spoke wheel;
FIG. 4 is an enlarged section view showing a spoke anchoring part of the rim;
FIGs. 5A through 5C show the rim to which the invention is applied, wherein FIG. 5A is a section view thereof, FIG. 5B is a front view thereof and FIG. 5C is a section view thereof taken along a line C-C in FIG. 5B;
FIG. 6 is a section view showing a prior art spoke wheel adapted for a tubeless tire; and
FIG. 7 is a section view showing another prior art spoke wheel in which a spoke head portion is anchored to a rim.

### BEST MODE FOR CARRYING OUT THE INVENTION

An embodiment of a spoke wheel of the invention will be explained below with reference to the drawings.
As shown in FIGs. 1 and 2, the spoke wheel W1 comprises a hub 1 mounted to a wheel axis, a rim 5 to which a tire may be mounted and a large number of wired spokes 2 connecting the hub with the rim. The spoke wheel W1 is arranged so that it is preferably used for motorcycles.
The hub 1 is provided with a large number of and two rows of lugs 21 projecting at positions distant from each other in the axial direction by a predetermined distance while each having a predetermined length in the axial direction. Each lug 21 has two nipple receiving holes 21 a distant from each other in the axial direction by a predetermined distance. The spokes 2 extend from the front and back of one lug 21 respectively in directions close to tangent lines of the hub. The respective spokes 2 are fixed so that the neighboring four spokes intersect with each other and form a set of spoke group G. The spoke wheel W1 shown in FIG. 1 is composed of eight sets of the spoke groups.
Each spoke 2 extends from the rim to the hub with a plane angle a as shown in FIG. 1 and with an elevation angle b as shown in FIG. 2 with respect to the center line (wheel center line) O-O of the spoke wheel W1. It is noted that while the angle seen from the front side is referred to as the plane angle a and the angle seen from the side is referred to as the elevation angle b, the plane and elevation angles are technical terms commonly used in the field of spoke wheel.

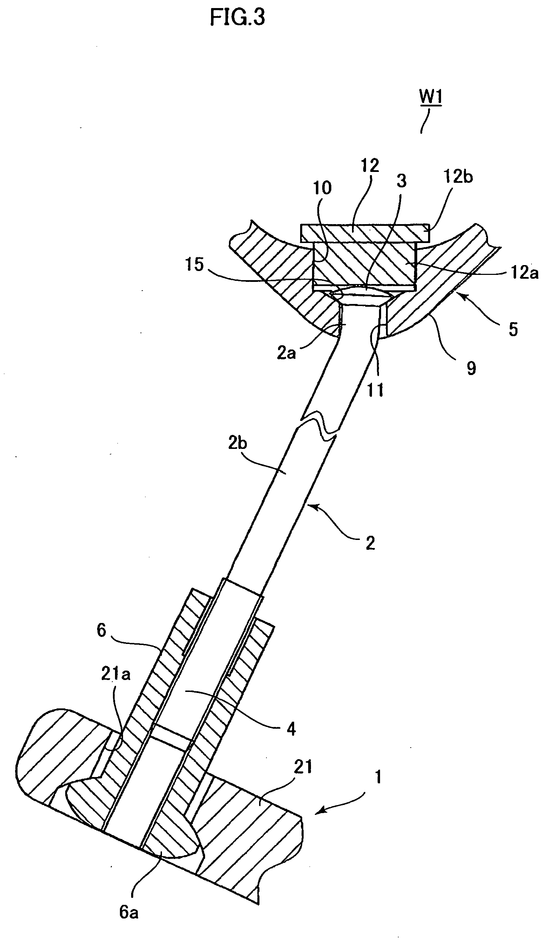

The rim 5 is provided with a projecting portion 9 formed circularly around the whole circumference of the rim so as to have a predetermined thickness at a widthwise center part (drop portion, well portion) of the rim as shown in FIG. 3. The projecting portion 9 is provided with a large number of concave portions 10 and spoke receiving holes 11 formed at certain intervals in the rim circumferential direction from the radially outside thereof (tire mounting side). The concave portion 10 and the spoke receiving hole 11 are formed so as to be coaxial with each other and to be aligned with the center line of the spoke wheel (wheel center line) O-O (see FIGs. 1 and 2): A bottom of the concave portion 10 continues to an upper edge of the spoke receiving hole 11 as a tapered stepped portion 15.

The spoke 2 is provided with a retaining head portion 3 formed at one end and a male screw portion 4 formed at another end as shown in FIG. 3. The spoke 2 is inserted into the spoke receiving hole 11 from the radially outside of the rim 5 and is retainably anchored as the head portion 3 thereof engages with the stepped portion 15 of the spoke receiving hole 11.
Meanwhile, a head 6a of the nipple 6 is retainably anchored by the nipple receiving hole 21 a formed in the lug 21. Then, the spoke 2 is tensioned between the rim 5 and the hub 1 by screwing the male screw portion 4 of the spoke 2 into the nipple 6. The spoke wheel W1 may be assembled by tensioning the spokes 2 described above around the whole circumference of the wheel while adjusting the nipples so that tensions of the respective spokes 2 are equalized and radial and axial center positions of the rim and the hub coincide with each other. A rubber cap (seal member) 12 is then fitted into the concave portion 10 from the radially outward surface of the rim 5 to hermetically keep the part connected with the spoke 2 and to mount a tubeless tire to the rim 5.

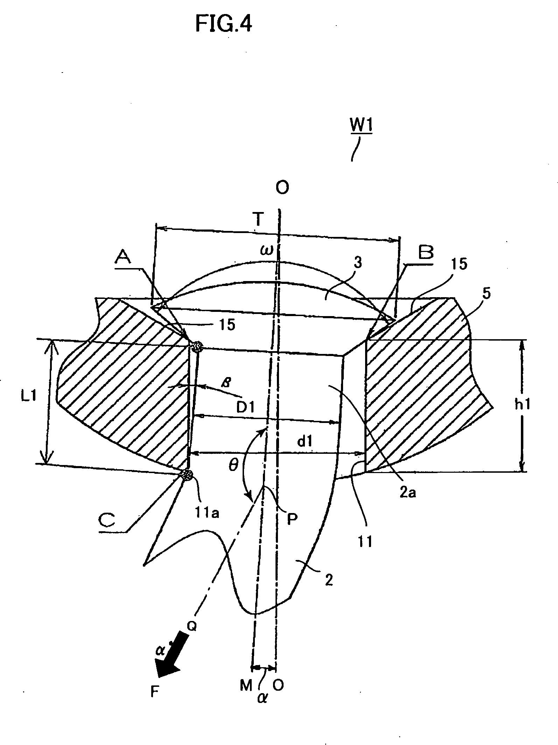

As shown in FIG. 4, the head portion 3 of the spoke 2 seats on the stepped portion 15 of the rim 5 while inclining by a predetermined angle α with respect to the wheel center line O-O. Then, a length L1 of the head straight portion 2a to a curve starting portion C is made to be shorter than the length L3 of the prior art head straight portion shown in FIG. 7.
Specifically, when a diameter of the spoke 2 is defined as D1, a diameter of the spoke receiving hole 11 as d1, a spoke head angle as ω and a thickness of the rim at the spoke receiving hole as h1, the predetermined angle α described above of the head straight portion 2a (center line O-M) of the spoke extending from the spoke receiving hole 11 is set as 1° < α°< 6° or more preferably as α= 4 to 5°.
While the curved angle θ curved at the curve starting portion C is set three-dimensionally by the plane and elevation angles a and b, the curved angle θ is set to be smaller than the prior art curved angle θ3 shown in FIG. 7 by the angle α. That is, the curved angle θ is set to be smaller than the curved angle θ3 set corresponding to the plane and elevation angles with respect to the wheel center line O-O by the angle α described above, i.e., θ° = θ3° - α°.

Because the spoke receiving hole 11 extends along the wheel center line O-O and its angle 0°, an angle β formed between the head straight portion 2a and the surface of the spoke receiving hole 11 is equal with the angle α of the head straight portion 2a. Further, because the curve starting portion C is arranged so that it butts against an edge (small opening portion) 11 a on the radially inside of the spoke receiving hole 11, the length L of the head straight portion 2a is L1 = m x h1. Where, m ≈ cos β and is within a range of 0.9 < m < 1.

That is, the present invention is characterized in that the curve starting portion C butts against the small opening portion 11a and locks the spoke from moving in a direction of thrusting up the spoke in addition to that the spoke 2 is retainably anchored to the rim 5 by the head portion 3 that contacts with the points A and B of the stepped portion 15 in the part of the spoke receiving hole 11 Accordingly, it is preferable to shorten the length of the head straight portion 2a as much as possible by subtracting processing variations (ΔL1) from the length L1 found by the numerical expression described above, i.e., L1' (= L1 - ΔL1). It is noted that ΔL1 is defined within a range of 0 < ΔL1 < 0.3.

The spoke 2 of the invention contacts at the three points A, B and C on the rim side as described above and is fastened by the nipple 6 on the hub side. Accordingly, a tensile force F caused by the nipple 6 acts on the body straight portion 2b (see FIG. 3) straightly extending from the curve starting portion C with the curved angle θ in a direction of a center line P-Q thereof. The tensile force F causes rotational moment in the head straight portion 2a centering on the point A and generates large compression stresses at the points B and C. The curve starting portion C acts so as to press the edge portion of the small opening portion 11a of the spoke receiving hole 11 near the point C in particular, so that the edge portion is squashed and the curve starting portion C contacts with the small opening portion 11a in face-to-face.

Even if a compressive force exceeding the tensile force described above acts on the spoke 2 and a force of thrusting up the spoke acts on the head straight portion 2a as an impact load is applied to the spoke wheel W1 and the rim 5 is deformed, burring-like resistance acts at the points B and C and the spoke 2 is locked and retained by the rim 5. That is, the deformation of the rim 5 in the radial direction is suppressed mainly by the face-to-face contact at the point C and the deformation of the rim 5 in the widthwise direction is suppressed mainly by the contact at the point B. Thus, the spoke head 3 is anchored and retained by the rim 5. This arrangement blocks the spoke head 3 from thrusting up the rubber cap 12 and releasing the air-tightness of the tubeless tire by removing the rubber cap 12.

It is noted that as the curve starting point C is the spoke curving starting point and the spoke is bent centering on the point C with the angle θ. The surface opposite from the point C is curved. Still more, because the spoke is fastened by the nipple on the hub side and the predetermined tension is applied, the effects described above brought out by the contacts with the points A, B and C may be obtained even if the length L1 is actually longer than a designed theoretical value (L1 = m x h1) by 2 or 3 mm.

When a drop impact test of the spoke wheel W1 was carried out, the hub 1 was damaged and the nipples fallen out while maintaining the air-tightness of the rim. As a result, it can be seen that the impact acting on the spoke wheel W1 is transmitted to the hub 1 through the spokes and acts as the force thrusting up the nipple 6 on the hub side while keeping the oneness of the spoke head portions 3 with the rim 5.

Next, the rim suitably applied to the spoke wheel adapted for the tubeless tire of the invention will be explained below with reference to FIG. 5.
The rim 5 is formed of a mold material made of aluminum alloy and has flange portions 21, bead seat portions 22 and a drop (well) portion 25 as shown in FIG. 5A. The drop portion 25 is provided with the projecting portion 9₂ projecting in the radially outward direction and formed at the widthwise center of the drop portion circularly around the whole circumference of the rim. The projecting portion 9₂ has a predetermined thickness i and a predetermined width j and is provided with the concave portions 10 and spoke receiving holes 11 whose center lines are the wheel center line at predetermined intervals g (g = 10° for example).
Each concave portion 10₂ has a small diameter portion 10a and a large diameter portion 10b formed on the radially outside of the small opening portion. The small opening portion 10a is connected with the spoke receiving hole 11 by the stepped portion 15 tapered with a predetermined angle k (k = 120° for example).
The spoke 2 is penetrated through the spoke receiving hole 11 and its head portion 3 is retainably anchored by the hole. The rubber cap 12 (see FIG. 3) having a body portion 12a and a flange portion 12b is fitted into the concave portion 10₂ so that the body and flange portions fit respectively into the small and large opening portions 10a and 10b and so that the upper surface of the rubber cap 12 becomes substantially flush with the upper surface of the projecting portion 9₂. It is noted that the concave portion in FIG. 3 may be provided with a large diameter portion as shown in FIG. 5C or the concave portion in FIG. 5C may be formed of only the small diameter portion as shown in FIG. 3.

The width j of the projecting portion 9₂ is sufficiently large so that the concave portion 10₂ for the rubber cap 12 may be formed. When the diameter of the concave portion is 12 mm, the width j is appropriate to be 15 to 17 mm. The thickness i of the projecting portion 9₂ is arranged so that it can accommodate the spoke receiving hole 11 and the concave portion 10₂ and is appropriate to be 8 to 11 mm when the spoke 2 is #7 [B].
As compared to the prior art projecting portion for anchoring the nipple 6 as shown in FIG. 6, the width j and thickness i of the projecting portion 9₂ described above are small by 2 to 3 mm in thickness and by 4 to 5 mm in width because the spoke head portion is anchored to the rim 5 and the concave portion and the spoke receiving hole are formed along the wheel center line. Accordingly, because the shape of the projecting portion 9₂ is small, the rim 5 may be lightened. Still more, because the projecting portion 9₂ projects on the drop portion side on which the tire is mounted and is invisible from the outside when the tire is mounted, the rim may be designed so that it looks simple.

It is noted that the drawings such as FIG. 1 show a case when the spoke wheel of the invention is applied to a rear wheel of the motorcycle, the spoke wheel of the invention is also applicable to a front wheel. Still more, the spoke wheel of the invention is applicable not only to the motorcycle but also to other two-wheel vehicles such as a bicycle and to other vehicles.

### [Description of Reference Numerals]

- 1: HUB
- 2: SPOKE
- 2a: HEAD STRAIGHT PORTION
- 2b: BODY (STRAIGHT) PORTION
- 3: HEAD
- 4: MALE SCREW PORTION
- 5: RIM
- 6: NIPPLE
- 9: PROJECTING PORTION
- 10: CONCAVE PORTION
- 11: SPOKE RECEIVING HOLE
- 12: SEAL MEMBER (RUBBER CAP)
- 15: STEPPED PORTION
- O-O: WHEEL CENTER LINE
- α: PREDETERMINED (INCLINED) ANGLE
- θ: PREDETERMINED (CURVED) ANGLE
- a: PLANE ANGLE
- b: ELEVATION ANGLE
- A, B: CONTACT POINT
- C: CURVE STARTING PORTION (CONTACT POINT)
- i: PREDETERMINED THICKNESS
- j: PREDETERMINED WIDTH

## Claims

1. A spoke wheel (W1) comprising a hub (1), a rim (5) and wired spokes (2) connecting the hub with the rim and arranged so that a head portion (3) of each spoke is retainably anchored to a spoke receiving hole (11) formed in said rim and a male screw portion (4) of said spoke is fastened to said hub (1) through a nipple (6),
said spoke receiving hole has a stepped portion (15) on the radially outside thereof and is formed in said rim (5) so that it is aligned with a wheel center line (O-O);
said spoke (2) has also a head straight portion (2a) extending straightly from said head portion (3) to a curve starting portion (C) and a body portion (2b) curved at the curve starting portion with a predetermined angle (θ) and extending toward said hub (1);
said spoke (2) being tensioned between said rim (5) and said hub (1) with predetermined plane and elevation angles (a) and (b) with respect to said rim; and **characterized in that**
said head straight portion (2a) is inserted through said spoke receiving hole (11) so that it is inclined by a predetermined angle (α) with respect to said wheel center line (O-O) and butts against an edge portion on the radially inside of said spoke receiving hole near said curve starting portion (C) as said head portion (3) seats on said stepped portion (15) in contact with two points (A, B) located on the sides opposite from each other with respect to said wheel center line (O-O) so that said spoke (2) is anchored to said rim (5) by resisting against a force in a direction of thrusting up said spoke.

2. The spoke wheel according to Claim 1, **characterized in that** said spoke wheel is arranged as a tubeless tire by forming a concave portion (10) on the radially outside of said spoke receiving hole (11) through said stepped portion (15) so that a center line thereof coincides with that of said spoke receiving hole (11) and that a seal member (12) is hermetically fitted into said concave portion (10).

3. The spoke wheel according to Claim 2, **characterized in that** a projecting portion (9) having a predetermined thickness (i) and a predetermined width (j) is formed circularly around the whole circumference of said rim (5) so as to project in the radially outward direction at a widthwise center part of said rim (5) and that said spoke receiving holes (11) and concave portions (10) are formed through said projecting portion (9).

## Patentansprüche

1. Speichenrad (W1), das eine Nabe (1), eine Felge (5) und Drahtspeichen (2) aufweist, die die Nabe mit der Felge verbinden und so angeordnet sind, dass ein Kopfabschnitt (3) einer jeden Speiche mit einem Speichenaufnahmeloch (11) haltbar verankert wird, das in der Felge ausgebildet ist, und das ein Außenschraubengewindeabschnitt (4) der Speiche an der Nabe (1) mittels eines Nippels (6) befestigt wird,
wobei das Speichenaufnahmeloch einen abgestuften Abschnitt (15) auf der radialen Außenseite davon aufweist und in der Felge (5) ausgebildet ist, so dass es mit einer Mittellinie (O-O) des Rades ausgerichtet ist;
wobei die Speiche (2) ebenfalls einen geradlinigen Kopfabschnitt (2a), der sich geradlinig vom Kopfabschnitt (3) zu einem Kurvenausgangsabschnitt (C) erstreckt, und einen Körperabschnitt (2b) aufweist, der am Kurvenausgangsabschnitt mit einem vorgegebenen Winkel (θ) gebogen ist und sich in Richtung der Nabe (1) erstreckt;
wobei die Speiche (2) zwischen der Felge (5) und der Nabe (1) bei einer vorgegebenen Ebene und Höhenwinkeln (a) und (b) mit Bezugnahme auf die Felge gespannt wird; und **dadurch gekennzeichnet, dass**
der geradlinige Kopfabschnitt (2a) durch das Speichenaufnahmeloch (11) so eingesetzt wird, dass er um einen vorgegebenen Winkel (α) mit Bezugnahme auf die Mittellinie (O-O) des Rades geneigt ist und gegen einen Randabschnitt auf der radialen Innenseite des Speichenaufnahmeloches in der Nähe des Kurvenausgangsabschnittes (C) anstößt, während der Kopfabschnitt (3) auf dem abgestuften Abschnitt (15) in Kontakt mit zwei Punkten (A, B) aufliegt, die auf den Seiten gegenüberliegend voneinander mit Bezugnahme auf die Mittellinie (O-O) des Rades angeordnet sind, so dass die Speiche (2) an der Felge (5) verankert wird, indem sie einer Kraft in einer Richtung des Stoßens der Speiche nach oben widersteht.

2. Speichenrad nach Anspruch 1, **dadurch gekennzeichnet, dass** das Speichenrad als ein schlauchloser Reifen angeordnet wird, indem ein konkaver Abschnitt (10) auf der radialen Außenseite des Speichenaufnahmeloches (11) durch den abgestuften Abschnitt (15) gebildet wird, so dass eine Mittellinie davon mit der des Speichenaufnahmeloches (11) übereinstimmt, und dass ein Dichtungselement (12) hermetisch in den konkaven Abschnitt (10) eingepasst wird.

3. Speichenrad nach Anspruch 2, **dadurch gekennzeichnet, dass** ein vorstehender Abschnitt (9) mit einer vorgegebenen Dicke (i) und einer vorgegebenen Breite (j) kreisförmig um den gesamten Umfang der Felge (5) ausgebildet ist, um so in der radialen Außenrichtung in einem mittleren Teil der Felge (5) in der Breitenrichtung vorzustehen, und dass die Speichenaufnahmelöcher (11) und die konkaven Abschnitte (10) durch den vorstehenden Abschnitt (9) gebildet werden.

## Revendications

1. Roue à rayons (W1), comprenant un moyeu (1), une jante (5) et des rayons métalliques (2), connectant le moyeu à la jante et agencés de sorte qu'une partie de tête (3) de chaque rayon est ancrée et retenue sur un trou de réception du rayon (11) formé dans ladite jante, une partie de vis mâle (4) dudit rayon étant fixée sur ledit moyeu (1) par l'intermédiaire d'un écrou de rayon (6) ;
ledit trou de réception du rayon comportant une partie étagée (15) sur sa partie radialement externe et étant formé dans ladite jante (5) de sorte à être aligné avec une ligne médiane de la roue (O-O) ;
ledit rayon (2) comportant en outre une partie de tête droite (2a), s'étendant en ligne droite de ladite partie de tête (3) vers une partie de démarrage d'une courbe (C), et une partie de corps (2b), courbée au niveau de la partie de démarrage de la courbe à un angle prédéterminé (θ) et s'étendant vers ledit moyeu (1) ;
ledit rayon (2) étant tendu entre ladite jante (5) et ledit moyeu (1) à des angles plans et d'élévation prédéterminés (a) et (b) par rapport à ladite jante ; et **caractérisée en ce que**
ladite partie de tête droite (2a) est insérée à travers ledit trou de réception du rayon (11) de sorte à être inclinée à un angle prédéterminé (α) par rapport à ladite ligne médiane de la roue (O-O), et bute contre une partie de bordure sur le côté radialement interne dudit trou de réception du rayon près de ladite partie de démarrage de la courbe (C) lorsque ladite partie de tête (3) repose sur ladite partie étagée (15), en contact avec deux points (A, B) situés sur les côtés mutuellement opposés par rapport à ladite ligne médiane de la roue (O-O), ledit rayon (2) étant ainsi ancré sur ladite jante (5) par suite de la résistance opposée à une force appliquée dans la direction d'une poussée vers le haut dudit rayon.

2. Roue à rayons selon la revendication 1, **caractérisée en ce que** ladite roue à rayons est agencée sous forme d'un pneumatique sans chambre à air en formant une partie concave (10) sur la partie radialement externe dudit trou de réception du rayon (11), à travers ladite partie étagée (15), de sorte que sa ligne médiane coïncide avec celle du trou de réception du rayon (11), et **en ce qu'**un élément de joint d'étanchéité (12) est ajusté de manière hermétique dans ladite partie concave (10).

3. Roue à rayons selon la revendication 2, **caractérisée en ce qu'**une partie en saillie (9), ayant une épaisseur prédéterminée (i) et une largeur prédéterminée (j) est formée de manière circulaire autour de l'ensemble de la circonférence de ladite jante (5), de sorte à déborder dans la direction allant radialement vers l'extérieur au niveau d'une partie centrale dans le sens de la largeur de ladite jante (5), et **en ce que** lesdits trous de réception des rayons (11) et lesdites parties concaves (10) sont formés à travers ladite partie en saillie (9).
